# EUROPÄISCHE PATENTANMELDUNG

(11) **EP 4 480 739 A2**
(43) Veröffentlichungstag der Anmeldung: **25.12.2024**
(21) Anmeldenummer: 24174582.7
(22) Anmeldetag: 07.05.2024
(51) Int. Cl.: B60L 53/14, B60L 53/18, B60L 53/30, B60L 53/31, H02G 11/00, H02G 11/02

(54) **KABELMANAGEMENT FÜR LADESTATIONEN VON FAHRZEUGEN**

(30) Priorität: 02.06.2023 DE 102023205169
(71) Anmelder: Siemens Aktiengesellschaft, 80333 München (DE)
(72) Erfinder: Perras, Stefan, 82223 Eichenau (DE); Völkl, Albert, 80687 München (DE)
(74) Vertreter: Siemens Patent Attorneys

(57) **Zusammenfassung**

Die vorliegende Erfindung betrifft eine Vorrichtung (100) zum Bereitstellen eines Ladekabels (101) für ein Fahrzeug (150). Die Vorrichtung (100) weist eine Trägerstruktur (103), die beabstandet von einem Boden (115) befestigbar ist, ein Ladekabel (101), welches an eine Elektrizitätsquelle anschließbar ist und einen Ladestecker (102) zum Anstecken an einem zu ladenden Fahrzeug (150) aufweist, auf. Ferner weist die Vorrichtung (100) eine erste Seilzugvorrichtung (110), die an der Trägerstruktur (103) befestigt ist, wobei die erste Seilzugvorrichtung (110) ein erstes Trägerseil (111) aufweist, welches zwischen einem ersten Aufhängepunkt (112) des Ladekabels (101) und der Trägerstruktur (103) befestigt ist, und eine zweite Seilzugvorrichtung (120), die an der Trägerstruktur (103) beabstandet von der ersten Seilzugvorrichtung (110) befestigt ist, wobei die zweite Seilzugvorrichtung (120) ein zweites Trägerseil (121) aufweist, welches zwischen einem zweiten Aufhängepunkt (122) des Ladekabels (101), welcher beabstandet von dem ersten Aufhängepunkt (112) ausgebildet ist, und der Trägerstruktur (103) befestigt ist, auf. Die erste Seilzugvorrichtung (110) und die zweite Seilzugvorrichtung (120) jeweils sind derart ausgebildet, dass die Längen des ersten Trägerseils (111) und des zweiten Trägerseils (121) unabhängig voneinander derart einstellbar sind, dass ein Abstand des ersten Aufhängepunkts (112) und des zweiten Aufhängepunkts (122) zum Boden (115) einstellbar ist.

## Beschreibung

### Technisches Gebiet

Die vorliegende Erfindung betrifft eine Vorrichtung und ein Verfahren zum Bereitstellen eines Ladekabels für ein Fahrzeug.

### Hintergrund der Erfindung

Neben der Elektrifizierung von kleineren Fahrzeugen, wie beispielsweise PKWs, ist ebenfalls die Elektrifizierung von Nutzfahrzeugen, wie beispielsweise Lastkraftwagen, möglich. Der Betrieb von Nutzfahrzeugen ist sehr kostengetrieben, weshalb bei deren Elektrifizierung zusätzliche Standzeiten durch Ladepausen für die Hochvoltbatterie vermieden werden müssen. Aus diesem Grund ist es vorteilhaft, beispielsweise an den Be- und Entladeplätzen von LKWs Ladeinfrastruktur aufzubauen. Da in LKW- bzw. Busdepots häufig wenig Platz ist, um zu rangieren, ist es schwierig, Ladesäulen oder Ladungsverteiler (Dispenser) so anzuordnen, dass sie den Betrieb des Depots möglichst wenig behindern. Auch eine Gefahr der Beschädigung von Ladesäulen oder Dispensern durch Rangiermanöver und damit des Ausfalls dieser Ladepunkte ist gegeben.

Eine Möglichkeit, das Risiko von Beschädigungen zu reduzieren, ist die Anbringung des Dispensers in ausreichendem Abstand über der Fahrbahn. Das Kabelmanagement der Ladekabel stellt in diesem Fall jedoch eine besondere Herausforderung dar, da der Ladestecker des Ladekabels oder das Ladekabel selbst nicht durch rangierenden LKWs beschädigt werden darf.

### Darstellung der Erfindung

Es ist eine Aufgabe der vorliegenden Erfindung, eine vorteilhafte Ladekabelvorrichtung zum Laden für ein Fahrzeug bereitzustellen.

Die Aufgabe wird durch eine Vorrichtung und ein Verfahren zum Bereitstellen eines Ladekabels für ein Fahrzeug gemäß den Gegenständen der unabhängigen Ansprüche gelöst.

Gemäß einem ersten Aspekt der vorliegenden Erfindung wird eine Vorrichtung zum Bereitstellen eines Ladekabels für ein Fahrzeug beschrieben. Die Vorrichtung weist eine Trägerstruktur, die beabstandet von einem Boden befestigbar ist, und ein Ladekabel auf, welches an eine Elektrizitätsquelle (beispielsweise über einen Leitungsverteiler) anschließbar ist und einen Ladestecker zum Anstecken an ein zu ladendes Fahrzeug aufweist. Das Ladekabel ist dabei an der Trägerstruktur befestigt.

Die Vorrichtung weist insbesondere eine an der Trägerstruktur befestigte erste Seilzugvorrichtung auf. Die erste Seilzugvorrichtung weist ein erstes Trägerseil auf, welches zwischen einem ersten Aufhängepunkt des Ladekabels und der Trägerstruktur befestigt ist. Ferner weist die Vorrichtung eine zweite Seilzugvorrichtung auf, die an der Trägerstruktur beabstandet von der ersten Seilzugvorrichtung befestigt ist. Die zweite Seilzugvorrichtung weist ein zweites Trägerseil auf, welches zwischen einem zweiten Aufhängepunkt des Ladekabels, welcher beabstandet von dem ersten Aufhängepunkt ausgebildet ist, und der Trägerstruktur befestigt ist. Die erste Seilzugvorrichtung und die zweite Seilzugvorrichtung sind jeweils derart ausgebildet, dass die Längen des ersten Trägerseils und des zweiten Trägerseils unabhängig voneinander derart einstellbar sind, dass ein Abstand des ersten Aufhängepunkts und des zweiten Aufhängepunkts zum Boden einstellbar ist.

Gemäß einem weiteren Aspekt wird ein Verfahren zum Bereitstellen eines Ladekabels für ein Fahrzeug mit einer oben genannten Vorrichtung beschrieben. Gemäß dem Verfahren werden die Längen des ersten Trägerseils und des zweiten Trägerseils unabhängig voneinander eingestellt, um einen Abstand des ersten Aufhängepunkts und des zweiten Aufhängepunkts zum Boden einzustellen.

Das Fahrzeug kann dabei ein elektrisch betriebenes Fahrzeug, beispielsweise ein rein elektrisch betriebenes Fahrzeug oder ein Hybridfahrzeug, darstellen, welches einen wiederaufladbaren Akkumulator aufweist. Das Fahrzeug weist insbesondere eine Ladebuchse auf, an welcher der Ladestecker des Ladekabels einsteckbar ist. Das Fahrzeug ist beispielsweise ein elektrisch betriebener Pkw oder ein Nutzfahrzeug, wie beispielsweise ein Lkw, ein Bus, eine Baumaschine oder eine Landkraftmaschine.

Die Trägerstruktur dient zum Befestigen der Vorrichtungskomponenten an einem Gebäude oder an einem Boden. Die Trägerstruktur trägt insbesondere die Seilzugvorrichtung und das Ladekabel. Das Ladekabel ist insbesondere an eine Elektrizitätsquelle angeschlossen oder anschließbar. Beispielsweise können elektrische Ladekomponenten, wie ein Ladeverteiler (Dispenser) an der Trägerstruktur befestigt sein, so dass Strom von dem Ladeverteiler auf das Ladekabel übertragbar ist.

An die Trägerstruktur ist die erste Seilzugvorrichtung befestigt. Die erste Seilzugvorrichtung weist das erste Trägerseil auf, welche das Ladekabel an dem ersten Aufhängepunkt befestigt. Mit anderen Worten hängt das Ladekabel an dem Trägerseil von der Trägerstruktur herab. Das erste Trägerseil kann an dem ersten Aufhängepunkt beispielsweise lösbar oder unlösbar mit dem Ladekabel befestigt sein. Entsprechend ist die zweite Seilzugvorrichtung mit dem zweiten Trägerseil an dem Ladekabel in dem zweiten Aufhängepunkt, lösbar oder unlösbar, befestigt, so dass das Ladekabel mit dem zweiten Trägerseil an der Trägerstruktur aufgehängt ist. Die Aufhängepunkte definieren den Abschnitt bzw. Punkt, an welchem die entsprechenden Trägerseile an dem Ladekabel befestigt sind.

Gemäß der vorliegenden Erfindung sind die Trägerseile beabstandet voneinander an der Trägerstruktur befestigt und halten entsprechende Abschnitte des Ladekabels an voneinander beabstandeten Aufhängepunkten. Jedes der Trägerseile kann den Abstand zwischen dem entsprechenden Aufhängepunkt und der Trägerstruktur individuell einstellen, so dass im Ergebnis die Aufhängepunkte eine einstellbare Höhe über einem Boden einnehmen. Bei einer Anordnung mit zwei Seilzugvorrichtungen verläuft das Ladekabel zunächst von einem Kopplungspunkt an der Trägerstruktur zur ersten Seilzugvorrichtung, bzw. zu einer Kopplung an dem ersten Aufhängepunkt. Von dort verläuft das Ladekabel zu der zweiten Seilzugvorrichtung, bzw. zu dem zweiten Aufhängepunkt an dem zweiten Trägerseil. Von dem zweiten Aufhängepunkt verläuft das Ladekabel weiter bis zu seinem Ende, an welchen der Ladestecker angeordnet ist. In weiteren beispielhaften Ausführungsformen, wie unten beschrieben, können nach dem zweiten Aufhängepunkt noch weitere Seilzugvorrichtung mit weiteren Aufhängepunkte vorgesehen werden.

Die Trägerseile können beispielsweise aus Draht, Kunststoff oder aus natürlichen Materialien, wie beispielsweise aus Hanf, hergestellt werden. Ferner kann im Rahmen der vorliegenden Erfindung ebenfalls eine Kette, beispielsweise aus Metall, oder ein Band bzw. Riemen ein Trägerseil darstellen.

Über die Einstellung der Seillängen der Trägerseile wird der Bodenabstand zwischen den Aufhängepunkten und dem Boden individuell eingestellt. Somit kann in einem inaktiven Zustand, in dem kein Fahrzeug an der Vorrichtung platziert ist, die Aufhängepunkte in Richtung Trägerstruktur eingestellt werden, so dass das Ladekabel bodenfern in der Nähe der Trägerstruktur vorliegt. Nachdem ein Fahrzeug insbesondere unter der Trägerstruktur rangiert hat und an einer vorbestimmten Position bzw. Ladeposition relativ zur Trägerstruktur positioniert ist, können die Seillängen der Trägerseile gezielt vergrößert werden, so dass ein Benutzer den Ladestecker greifen kann und in die Ladebuchse des Fahrzeugs einstecken kann.

Aufgrund der flexiblen Lagerung des Ladekabels an zwei beabstandeten Seilzugvorrichtungen bzw. Aufhängepunkten über dem Boden kann der Lagerstecker in der Nähe der Ladebuchse des Fahrzeugs positioniert werden, ohne dass die Gewichtskraft des Seils von dem Benutzer getragen werden muss. Neben der exakt einstellbaren Höhe kann ferner sehr flexibel eine horizontale Position, d. h. eine Position zwischen dem Kopplungspunkt, dem ersten Aufhängepunkt und dem zweiten Aufhängepunkt bei einer vordefinierten Höhe eingestellt werden. Die Seilzugvorrichtungen können auch vertikal über dem Kopplungspunkt angeordnet sein, so dass der Ladestecker mithilfe der Seilzüge auch Positionen erreicht, die über den Kopplungspunkt hinausgehen. Bei einem einfach herabhängenden Ladekabel ist eine horizontale Verstellung des Kopplungspunkts zwischen dem Ladestecker und der Ladebuchse schwierig, da das Ladekabel ein hohes Gewicht aufweist und der Benutzer das Ladekabel selbst tragen bzw. ziehen muss. Aufgrund der horizontal beabstandeten Aufhängepunkte der Seilzugvorrichtungen, welche zudem in ihrer Höhe eingestellt werden können, kann somit eine Flexibilität in horizontaler Richtung ermöglicht werden. Ein exaktes Positionieren des Fahrzeugs an einer exakt vorbestimmten Position relativ zu der Vorrichtung ist somit nicht notwendig, da auch horizontal eine flexible Einstellmöglichkeit der Position des Ladesteckers möglich ist.

Gemäß einer weiteren beispielhaften Ausführungsform ist das Ladekabel derart konfiguriert, dass das Ladekabel von einem Kopplungspunkt mit der Trägerstruktur aus zu dem ersten Aufhängepunkt und anschließend zu dem zweiten Aufhängepunkt verläuft, wobei das Ladekabel derart an der Trägerstruktur, der ersten Seilzugvorrichtung und der zweiten Seilzugvorrichtung angeordnet ist, dass entlang einer horizontalen Richtungskomponente der Kopplungspunkt zwischen dem erste Aufhängepunkt und dem zweiten Aufhängepunkt vorliegt.

Mit anderen Worten hängt das Ladekabel zunächst von dem Kopplungspunkt von der Trägerstruktur herunter. Anschließend verläuft das Ladekabel zu dem ersten Aufhängepunkt, bildet eine Schlaufe und verläuft in Gegenrichtung zu dem zweiten Aufhängepunkt. Der Bereich des Ladekabels zwischen dem Kopplungspunkt und dem zweiten Aufhängepunkt bildet somit einen C-förmigen Verlauf. Der Bereich der Schlaufe am ersten Aufhängepunkt kann flexibel in Richtung Boden verstellt werden. Entsprechend kann auch der Bereich am Ladestecker bzw. am zweiten Aufhängepunkt flexiblen Richtung Boden verstellt werden. Je nachdem, wie die Längenverhältnisse zwischen dem ersten Tragseil und dem zweiten Tragseil ausgebildet sind, kann die Form des Seilverlaufs des Ladekabels eingestellt werden. Da die Trägerseile verschiebefest, d.h. nicht entlang des Ladekabels verschiebbar, angeordnet sind, ändert eine unterschiedliche Einstellung der Seillängen der Trägerseile nicht nur eine vertikale Position der Aufhängepunkte über dem Boden, sondern ebenfalls eine horizontale Position der Aufhängepunkte und entsprechend des Ladesteckers. Mit dem beschriebenen Ausführungsbeispiel kann somit neben einer vertikalen Position ebenfalls eine horizontale Position des Wahlsteckers eingestellt werden, ohne dass eine hohe Muskelkraft des Benutzers notwendig ist und ohne, dass das Fahrzeug exakt an einer vorbestimmten Position zum Laden positioniert werden muss.

Gemäß einer weiteren beispielhaften Ausführungsform weist die Trägerstruktur einen Querbalken auf, an welchem die erste Seilzugvorrichtung und die zweiten Seilzugvorrichtung angeordnet sind. In einer ersten Alternative kann der Querbalken zumindest einseitig mittels einer Bodenstütze beabstandet am Boden befestigbar sein. Alternativ kann der Querbalken an einer Deckenkonstruktion, insbesondere an einer Decke eines Gebäudes, befestigbar sein.

In der ersten Alternative bildet die Trägerstruktur eine unabhängige Struktur, bei welcher der Querbalken mit dem Bodenträger, beispielsweise aus einer Stahlkonstruktion oder aus Beton, am Boden befestigt ist. Insbesondere kann an einem Ende des Querbalkens der Bodenträger angeordnet werden. Der Bodenträger oder der Querbalken können beispielsweise aus einem Vollmaterial hergestellt werden (z.B. T-Träger) oder einen Fachwerkträger ausbilden. Ferner kann an einem gegenüberliegenden Ende des Querbalkens ein weiterer Bodenträger angeordnet werden, so dass an beiden Enden des Querbalkens ein entsprechender Bodenträger vorgesehen ist.

Gemäß einer weiteren beispielhaften Ausführungsform weist die Trägerstruktur einen Ausleger auf, an welchem die erste Seilzugvorrichtung und/oder die zweite Seilzugvorrichtung angeordnet ist. Der Ausleger ist an dem Querbalken befestigt und ragt seitlich zur Erstreckungsrichtung des Querbalkens heraus. Beispielsweise können an dem Querbalken Ladekomponenten, wie beispielsweise ein Ladungsverteiler (Dispenser), angeordnet werden, wobei die Seilzugvorrichtungen beabstandet voneinander an dem Ausleger befestigt sind. Der Ausleger kann beispielsweise aus einem Vollmaterial bestehen oder einen Fachwerkträger darstellen.

Insbesondere kann der Ausleger rechtwinklig bzw. einen Winkel von 90° zwischen der Erstreckungsrichtung des Auslegers und der Erstreckungsrichtung des Querbalkens ausbilden. Das Fahrzeug kann beispielsweise entlang einer vorbestimmten Einfahrrichtung in die Vorrichtung einfahren. Der Querbalken erstreckt sich beispielsweise quer zu der Einfahrrichtung, so dass das Fahrzeug unter dem Querbalken positioniert werden kann. Der Ausleger, welcher sich insbesondere rechtwinklig von dem Querbalken erstreckt, verläuft somit parallel zur Einfahrrichtung und somit entlang einer Seitenfläche des positionierten Fahrzeugs. Die an dem Ausleger beabstandet angeordneten Seilzugvorrichtungen verlaufen somit entlang der Seitenfläche des positionierten Fahrzeugs. Mittels Einstellens der Längen der entsprechenden Trägerseile kann somit die Position des Ladesteckers entlang der Seitenflächen des Fahrzeugs eingestellt werden.

Gemäß einer weiteren beispielhaften Ausführungsform ist der Ausleger schwenkbar an dem Querbalken befestigbar. Somit kann beispielsweise eine Position der an dem Ausleger befestigten Seilzugvorrichtungen quer zur Einfahrrichtung justiert werden. Beispielsweise kann auch in einem inaktiven Zustand der Ausleger eingeschwenkt werden, so dass dieser parallel zu dem Querbalken verläuft und in einem aktiven Zustand der Ausleger ausgeschwemmt werden, so dass dieser rechtwinklig zu dem Querträger verläuft.

Gemäß einer weiteren beispielhaften Ausführungsform ist der Ausleger in Erstreckungsrichtung des Querbalkens verschiebbar angeordnet. Hilfsweise kann der Ausleger über Führungsschienen entlang des Querbalkens verschoben werden. Somit kann beispielsweise eine unterschiedliche Breite der zu ladenden Fahrzeuge berücksichtigt werden, so dass das Ladekabel exakt entlang der Seitenflächen herabgehängt werden kann.

Gemäß einer weiteren beispielhaften Ausführungsform weist der Ausleger zwischen zwei Auslegerenden einen Verstärkungsbalken auf, welcher (im Wesentlichen senkrecht nach oben, gegenüberliegend zum Boden) von dem Ausleger hervorsteht, wobei zumindest ein gespanntes Verstärkungsseil die Auslegerenden und den Verstärkungsbalken zur Stabilisierung des Auslegers verbindet. Somit können Biegemomente, die durch die Gewichtskraft des Ladekabels und der angeordneten Seilzugvorrichtungen in den Ausleger induziert werden, durch die Verstärkungsseile und den Verstärkungsbalken reduziert bzw. ausgeglichen werden.

Gemäß einer weiteren beispielhaften Ausführungsform weist die erste Seilzugvorrichtung und/oder die zweite Seilzugvorrichtung eine Seilwinde auf. Die Seilwinde ist insbesondere eine angetriebene Seilwinde, welche das entsprechende Trägerseil aufrollen und abwickeln kann. Die entsprechende Seilwinde der ersten Seilzugvorrichtung und die Seilwinde der zweiten Seilzugvorrichtung können beispielsweise mit einer gemeinsamen Steuereinheit gekoppelt werden. Die Steuereinheit kann entsprechende Steuersignale an die Seilwinden übertragen, um diese zu steuern und entsprechend die Seillängen der Trägerseile einzustellen. Dabei kann die Steuereinheit zentral von einer Steuerzentrale beabstandet von der Vorrichtung gesteuert werden oder, wie in einer beispielhaften Ausführungsform beschrieben, von dem Benutzer gesteuert werden.

Gemäß einer weiteren beispielhaften Ausführungsform ist die Seilwinde eine elektrische Seilwinde zum Einstellen der Länge des entsprechenden Trägerseils. Die Seilwinde weist beispielsweise einen elektrischen Antriebsmotor auf, der die Seilwinde entsprechend antreibt.

Gemäß einer weiteren beispielhaften Ausführungsform ist in dem Ladekabel, insbesondere an dem Ladestecker, ein Bedienelement zur Steuerung der elektrischen Seilwinde angeordnet, wobei das Bedienelement insbesondere drahtlos oder drahtgebunden mit der Seilwinde bzw. den Seilwinden zum Austausch von Steuerdaten gekoppelt ist. In der drahtgebundenen Ausführungsform kann ein Signalkabel am Ladekabel entlang von dem Bedienelement bis zum Dispenser oder bis zur Seilwinde geführt werden. Der Benutzer kann somit direkt am Ladestecker die entsprechende Position des Ladesteckers über das Steuern der Seilwinden und entsprechend der Längen der Trägerseile steuern, ohne dass der Benutzer Zugkräfte auf das Ladekabel aufwenden muss.

Gemäß einer weiteren beispielhaften Ausführungsform weist die Seilwinde zum Einstellen der Länge des entsprechenden Trägerseils eine federbasierte Einzugsvorrichtung mit einer Rückzugsfeder, insbesondere einer Spiralfeder, auf, welche derart konfiguriert ist, dass beim Ausziehen des entsprechenden Trägerseils aus der Seilwinde eine Vorspannung der Rückzugsfeder generierbar ist. Der Benutzer kann somit das Ladekabel in die gewünschte Position ziehen und den Ladestecker in die Ladebuchse des Fahrzeugs koppeln. Nach Beendigung des Ladevorgangs führt die federbasierte Vorspannkraft dazu, dass beispielsweise mit einer geringen Kraft des Benutzers die Trägerseile mittels der entsprechenden federbasierten Einzugsvorrichtung aufgerollt werden können. Zudem kann die federbasierte Einzugsvorrichtung einen Rastmechanismus aufweisen, welcher beim Beenden des Herausziehens des entsprechenden Trägerseils die Seilwinde einrastet, so dass ein Aufrollen aufgrund der Federkraft unterbunden wird. Ein nochmaliges kurzes Ziehen des Benutzers an dem entsprechenden Trägerseile führt zu einem Lösen der Verrastung, so dass das Trägerseil mittels der federbasierten Einzugsvorrichtung aufgerollt wird. Somit ist eine Steuerung der Seilwinden bzw. der Längen der Trägerseile möglich, ohne dass eine elektrische Energieversorgung für die Seilwinden notwendig ist.

Gemäß einer weiteren beispielhaften Ausführungsform ist die Seilwinde an der Trägerstruktur oder an dem entsprechenden Aufhängepunkt angeordnet. Ist die Seilwinde an der Trägerstruktur angeordnet, so ist diese ortsfest und der Aufhängepunkt an dem entsprechenden Trägerseil verstellt sich bzw. bewegt sich relativ zur Seilwinde. Ist die Seilwinde an dem Aufhängepunkt selbst angeordnet, so kann das Trägerseil an der Trägerstruktur fixiert werden und die Seilwinde bewegt sich relativ zu der Trägerstruktur und verfährt zusammen mit dem Aufhängepunkt in Richtung Boden.

Gemäß einer weiteren beispielhaften Ausführungsform ist an dem Ladekabel ein Bedienseil befestigt, welches derart angeordnet ist, dass mittels des Bedienseils das Ladekabel für einen Benutzer erreichbar ist. Das Bedienseil kann insbesondere in der Nähe oder an dem zweiten Aufhängepunkt, bzw. an dem Aufhängepunkt, welcher am nächsten am Ladestecker positioniert ist, befestigt werden. Das Bedienseil ist leicht und flexibel ausgebildet, so dass ein durchfahrendes Fahrzeug nicht beschädigt wird. Wenn die Trägerseile kurz eingestellt sind und das Ladekabel entsprechend beabstandet vom Boden positioniert ist, kann der Benutzer dennoch das Ende des Bedienseils greifen und das Ladekabel zu sich heranziehen, bis er dieses greifen kann.

Mit der erfindungsgemäßen Vorrichtung können entsprechend auch eine Vielzahl von Seilzugvorrichtungen vorgesehen werden. Entsprechend kann in einer weiteren beispielhaften Ausführungsform der Vorrichtung eine dritte Seilzugvorrichtung aufweisen, die an der Trägerstruktur beabstandet von der ersten Seilzugvorrichtung und von der zweiten Seilzugvorrichtung befestigt ist. Die dritte Seilzugvorrichtung weist ein drittes Trägerseil auf, welches zwischen einem dritten Aufhängepunkt des Ladekabels, welcher beabstandet von dem ersten Aufhängepunkt und dem zweiten Aufhängepunkt ausgebildet ist, und der Trägerstruktur befestigt ist. Die dritte Seilzugvorrichtung ist derart ausgebildet, dass die Länge des dritten Trägerseils einstellbar ist.

Insbesondere kann dabei das Ladekabel von dem Kopplungspunkt zu dem ersten Aufhängepunkt, weiter zu dem zweiten Aufhängepunkt und schließlich zu dem dritten Aufhängepunkt verlaufen. Der Koppelpunkt ist dabei zwischen dem ersten Aufhängepunkt und dem zweiten Aufhängepunkt angeordnet. Insbesondere ist die dritte Seilzugvorrichtung derart angeordnet, dass der Kopplungspunkt ebenfalls zwischen dem zweiten und dem dritten Aufhängepunkt vorliegt. Mit anderen Worten hängt das Ladekabel zunächst von dem Kopplungspunkt von der Trägerstruktur herunter. Anschließend verläuft das Ladekabel zu dem ersten Aufhängepunkt, bildet eine Schlaufe und verläuft in Gegenrichtung zu dem zweiten Aufhängepunkt. Dort bildet das Ladekabel erneut eine Schlaufe und verläuft zum dritten Aufhängepunkt. Der Bereich des Ladekabels zwischen dem Kopplungspunkt und dem dritten Aufhängepunkt bildet somit einen S-förmigen Verlauf. Aufgrund der Längeneinstellung von drei oder mehr Trägerseilen kann die Flexibilität bzw. können die Einstellmöglichkeiten der Position des Ladesteckers erhöht werden. Durch die zusätzlichen Seilzugvorrichtungen kann das Durchhängen des Ladekabels verringert werden. Dadurch kann ferner auch die Länge des Querbalkens bzw. des Auslegers, an dem die Seilzugvorrichtungen angeordnet werden können, verkürzt werden, da das Ladekabel somit mehrfach gefaltet werden kann.

Gemäß einer weiteren beispielhaften Ausführungsform können an der Trägerstruktur ferner weitere Seilzugvorrichtungen angeordnet werden, welche ein weiteres Ladekabel tragen, um mehrere Fahrzeuge zu laden. Entsprechend weist eine solche Vorrichtung ein weiteres Ladekabel auf, welches an eine Elektrizitätsquelle anschließbar ist und einen weiteren Ladestecker zum Anstecken an einem weiteren zu ladenden Fahrzeug aufweist, wobei das weitere Ladekabel an der Trägerstruktur befestigt ist. Ferner weist die Vorrichtung eine weitere erste Seilzugvorrichtung, die an der Trägerstruktur befestigt ist, wobei die weitere erste Seilzugvorrichtung ein weiteres erstes Trägerseil aufweist, welches zwischen einem weiteren ersten Aufhängepunkt des weiteren Ladekabels und der Trägerstruktur befestigt ist. Ferner weist die Vorrichtung eine weitere zweite Seilzugvorrichtung, die an der Trägerstruktur beabstandet von der weiteren ersten Seilzugvorrichtung befestigt ist, auf, wobei die weitere zweite Seilzugvorrichtung ein weiteres zweites Trägerseil aufweist, welches zwischen einem weiteren zweiten Aufhängepunkt des weiteren Ladekabels, welcher beabstandet von dem weiteren ersten Aufhängepunkt ausgebildet ist, und der Trägerstruktur befestigt ist. Die weitere erste Seilzugvorrichtung und die weitere zweite Seilzugvorrichtung sind jeweils derart ausgebildet, dass die Längen des weiteren ersten Trägerseils und des weiteren zweiten Trägerseils unabhängig voneinander derart einstellbar sind, dass ein Abstand des weiteren ersten Aufhängepunkts und des weiteren zweiten Aufhängepunkts zum Boden einstellbar ist.

Weist die Trägerstruktur einen Querbalken auf, so sind die ersten und zweiten Seilzugvorrichtungen entlang des Querbalkens beabstandet zu den weiteren ersten und zweiten Seilzugvorrichtungen angeordnet. Somit können beispielsweise zwei Fahrzeuge nebeneinander unter dem Querbalken positioniert werden und das eine Fahrzeug mit dem Ladekabel und das andere Fahrzeug mit dem weiteren Ladekabel geladen werden.

Beispielsweise kann ein weiterer Ausleger an den Querbalken positioniert werden, welcher beabstandet von dem anderen Ausleger angeordnet ist. Der weitere Ausleger kann entsprechend die weitere erstes Seilzugvorrichtung und die weitere zweite Seilzugvorrichtung aufweisen.

Entsprechend können in einer weiteren beispielhaften Ausführungsform eine Vielzahl von separaten ersten und zweiten Seilzugvorrichtungen angeordnet werden und somit eine entsprechende Vielzahl von zu ladenden Fahrzeugen positioniert werden.

Alle Ladekabel können beispielsweise an einem gemeinsamen Ladungsverteiler (Dispenser), der an der Trägerstruktur befestigt ist, gekoppelt werden.

Zusammenfassend wird mit der Erfindung eine Kabelmanagementvorrichtung bestehend aus zwei oder mehreren Seilzugvorrichtungen beschrieben, die sicherstellen, dass der nicht gebrauchte Kabelabschnitt des Ladekabels in sicherer Entfernung zur Fahrbahn bzw. dem Boden aufgehängt ist. Wird mehr benötigt, kann es entweder mechanisch nach unten gezogen werden oder mithilfe eines gesteuerten Seilzuges (z.B. elektrisch) herabgelassen werden.

Die erfindungsgemäße Vorrichtung ist aufgrund der wenigen beweglichen Teile robust und kann einfach und kostengünstig hergestellt werden. Durch das einmalige oder mehrfache Falten des Ladekabels kann dieses eine große Kabellänge aufweisen, so dass eine Lademöglichkeit für eine hohe Varianz an Fahrzeugen und unterschiedlichen Fahrzeuglängen bedient werden kann. Gleichzeitig behindert das Kabel keine rangierenden Fahrzeuge.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind. Unabhängig vom grammatikalischen Geschlecht eines bestimmten Begriffes sind Personen mit männlicher, weiblicher oder anderer Geschlechteridentität mit umfasst.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Figuren näher beschrieben.
Fig. 1 zeigt eine schematische Darstellung einer Vorrichtung mit zwei Seilzugvorrichtungen, wobei ein Ladestecker in einer Ladebuchse eines Fahrzeugs gekoppelt ist, gemäß einer beispielhaften Ausführungsform der vorliegenden Erfindung.
Fig. 2 zeigt eine schematische Darstellung der Vorrichtung aus Figur 1, wobei das Ladekabel beabstandet vom Boden gehalten wird, gemäß einer beispielhaften Ausführungsform der vorliegenden Erfindung.
Fig. 3 zeigt eine schematische Darstellung einer Vorrichtung mit einer Trägerstruktur, die an einer Decke befestigt ist, gemäß einer beispielhaften Ausführungsform der vorliegenden Erfindung.
Fig. 4 zeigt eine schematische Darstellung einer Vorrichtung mit drei Seilzugvorrichtungen gemäß einer beispielhaften Ausführungsform der vorliegenden Erfindung.

Detaillierte Beschreibung von exemplarischen Ausführungsformen

Gleiche oder ähnliche Komponenten sind in den Figuren mit gleichen Bezugsziffern versehen. Die Darstellungen in den Figuren sind schematisch und nicht maßstäblich.

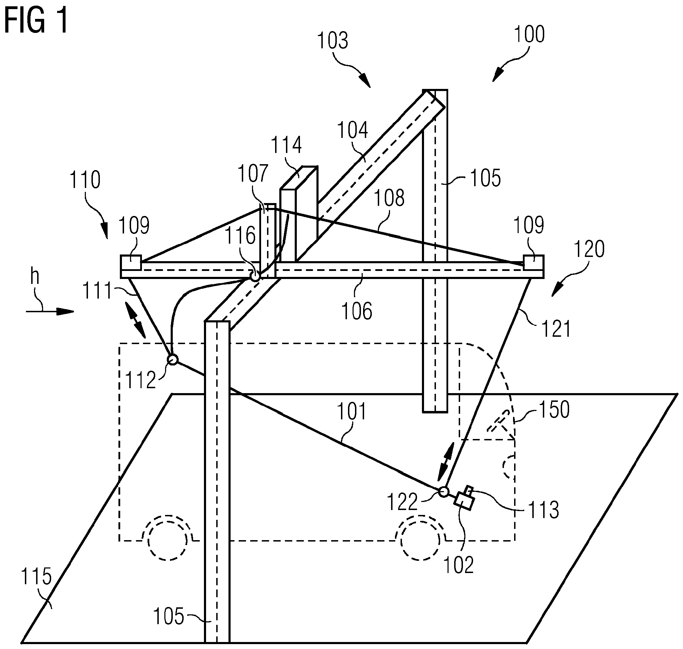

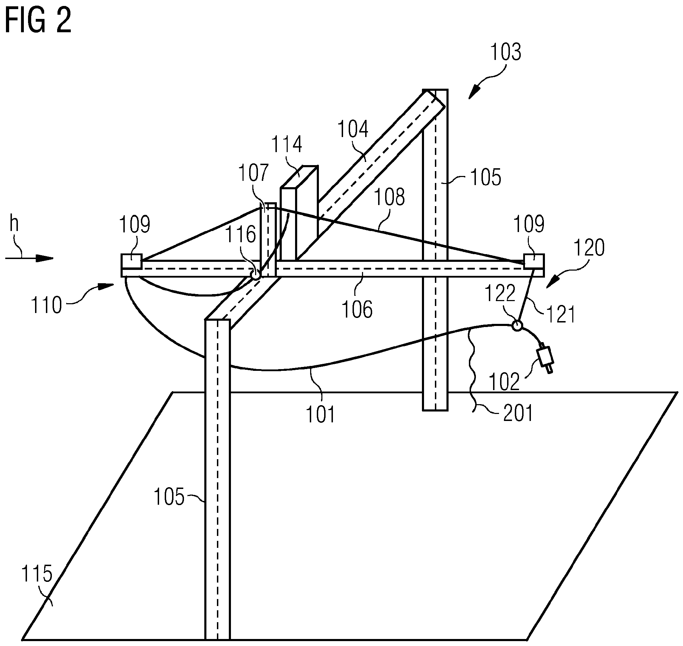

Fig. 1 zeigt eine Vorrichtung 100 mit zwei Seilzugvorrichtungen 110, 120, wobei ein Ladestecker 102 in einer Ladebuchse eines Fahrzeugs 150 gekoppelt ist. Fig. 2 zeigt die Vorrichtung 100 aus Figur 1, wobei das Ladekabel 101 beabstandet vom Boden 115 gehalten wird.

Die Vorrichtung 100 weist eine Trägerstruktur 103, die beabstandet von einem Boden 115 befestigbar ist, ein Ladekabel 101, welches an eine Elektrizitätsquelle anschließbar ist und einen Ladestecker 102 zum Anstecken an einem zu ladenden Fahrzeug 150 aufweist, auf. Ferner weist die Vorrichtung 100 eine erste Seilzugvorrichtung 110, die an der Trägerstruktur 103 befestigt ist, wobei die erste Seilzugvorrichtung 110 ein erstes Trägerseil 111 aufweist, welches zwischen einem ersten Aufhängepunkt 112 des Ladekabels 101 und der Trägerstruktur 103 befestigt ist, und eine zweite Seilzugvorrichtung 120, die an der Trägerstruktur 103 beabstandet von der ersten Seilzugvorrichtung 110 befestigt ist, wobei die zweite Seilzugvorrichtung 120 ein zweites Trägerseil 121 aufweist, welches zwischen einem zweiten Aufhängepunkt 122 des Ladekabels 101, welcher beabstandet von dem ersten Aufhängepunkt 112 ausgebildet ist, und der Trägerstruktur 103 befestigt ist, auf. Die erste Seilzugvorrichtung 110 und die zweite Seilzugvorrichtung 120 jeweils sind derart ausgebildet, dass die Längen des ersten Trägerseils 111 und des zweiten Trägerseils 121 unabhängig voneinander derart einstellbar sind, dass ein Abstand des ersten Aufhängepunkts 112 und des zweiten Aufhängepunkts 122 zum Boden 115 einstellbar ist.

Die Trägerstruktur 103 dient zum Befestigen der Vorrichtungskomponenten an dem Boden 115. Die Trägerstruktur 103 weist einen Querbalken 104 auf, an welchem die erste Seilzugvorrichtung 110 und die zweiten Seilzugvorrichtung 120 angeordnet sind. In der dargestellten Ausführungsform ist der Querbalken mittels zweier Bodenträger 105, beispielsweise aus einer Stahlkonstruktion oder aus Beton, am Boden 115 befestigt, so dass an beiden Enden des Querbalkens 104 ein entsprechender Bodenträger 105 vorgesehen ist.

Die Trägerstruktur 103 weist einen Ausleger 106 auf, an welchem die erste Seilzugvorrichtung 110 und die zweite Seilzugvorrichtung 120 angeordnet ist. Der Ausleger 106 ist an dem Querbalken 104 befestigt und ragt seitlich zur Erstreckungsrichtung des Querbalkens 104 heraus. Beispielsweise können an dem Querbalken 104 Ladekomponenten, wie beispielsweise ein Ladungsverteiler (Dispenser) 114, angeordnet werden, wobei die Seilzugvorrichtungen 110, 120 beabstandet voneinander an dem Ausleger 106 befestigt sind. Der Ausleger 106 kann beispielsweise aus einem Vollmaterial bestehen oder einen Fachwerkträger darstellen.

Insbesondere ist der Ausleger 106 rechtwinklig zur der Erstreckungsrichtung des Querbalkens 104 ausgebildet. Das Fahrzeug 150 kann beispielsweise entlang einer vorbestimmten Einfahrrichtung in die Vorrichtung 100 einfahren. Der Querbalken 104 erstreckt sich beispielsweise quer zu der Einfahrrichtung, so dass das Fahrzeug 150 unter dem Querbalken 104 positioniert werden kann. Der Ausleger 106, welche sich insbesondere rechtwinklig von dem Querbalken 104 erstreckt, verläuft somit parallel zur Einfahrrichtung und somit entlang einer Seitenfläche des positionierten Fahrzeugs 150. Die an dem Ausleger 106 beabstandet angeordneten Seilzugvorrichtungen 110, 120 verlaufen somit entlang der Seitenfläche des positionierten Fahrzeugs 115. Mittels Einstellens der Längen der entsprechenden Trägerseile 111, 112 kann somit die Position des Ladesteckers 102 entlang der Seitenflächen des Fahrzeugs 150 eingestellt werden.

Die erste Seilzugvorrichtung 110 weist das erste Trägerseil 111 auf, welche das Ladekabel 101 an dem ersten Aufhängepunkt 112 befestigt. Mit anderen Worten hängt das Ladekabel 101 an dem Trägerseil 111 von dem Ausleger 101 herab. Das erste Trägerseil 111 kann an dem ersten Aufhängepunkt 112 beispielsweise lösbar oder unlösbar mit dem Ladekabel 101 befestigt sein. Entsprechend ist die zweite Seilzugvorrichtung 120 mit dem zweiten Trägerseil 121 an dem Ladekabel 101 in den zweiten Aufhängepunkt 122, lösbar oder unlösbar, befestigt, so dass das Ladekabel 101 mit dem zweiten Trägerseil 121 an dem Ausleger 106 aufgehängt ist.

Jedes der Trägerseile 111, 121 kann den Abstand zwischen dem entsprechenden Aufhängepunkt 112, 122 und der Trägerstruktur 103 individuell einstellen. Bei einer Anordnung mit zwei Seilzugvorrichtungen 110, 120 verläuft das Ladekabel 101 zunächst von einem Kopplungspunkt 116 an der Trägerstruktur 103, immer beispielsweise an dem Querbalken 104 oder dem Ausleger 106, zur ersten Seilzugvorrichtung 110, bzw. zu einer Kopplung an dem ersten Aufhängepunkt 112. Von dort verläuft das Ladekabel 101 zu der zweiten Seilzugvorrichtung 120, bzw. zu dem zweiten Aufhängepunkt 122 an dem zweiten Trägerseil 121. Von dem zweiten Aufhängepunkt 122 verläuft das Ladekabel 101 weiter bis zu seinem Ende, an welchem der Ladestecker 102 angeordnet ist.

Über die Einstellung der Seillängen der Trägerseile 111, 121 wird der Bodenabstand zwischen den Aufhängepunkten 112, 122 und den Boden 115 individuell eingestellt. Somit kann in einem inaktiven Zustand, in dem kein Fahrzeug 150 an der Vorrichtung 110 platziert ist (siehe Fig. 2), die Aufhängepunkte 112, 122 in Richtung Trägerstruktur 103 eingestellt werden, so dass das Ladekabel 101 bodenfern in der Nähe der Trägerstruktur 103 vorliegt. Nachdem ein Fahrzeug 115 insbesondere unter dem Querbalken 104 rangiert hat und an einer vorbestimmten Position bzw. Ladeposition relativ zur Trägerstruktur 103 positioniert ist, können die Seillängen der Trägerseile 111, 121 gezielt vergrößert werden, so dass ein Benutzer den Ladestecker 102 greifen kann und in die Ladebuchse des Fahrzeugs 115 einstecken kann.

Das Ladekabel 101 ist derart konfiguriert, dass das Ladekabel 101 von dem Kopplungspunkt 116 aus zu dem ersten Aufhängepunkt 112 und anschließend zu dem zweiten Aufhängepunkt 122 verläuft, wobei das Ladekabel 101 derart an der Trägerstruktur 103, der ersten Seilzugvorrichtung 110 und der zweiten Seilzugvorrichtung 120 angeordnet ist, dass entlang einer horizontalen Richtungskomponente h der Kopplungspunkt 116 zwischen dem erste Aufhängepunkt 111 und dem zweiten Aufhängepunkt 122 vorliegt. Das Ladekabel 101 hängt zunächst von dem Kopplungspunkt 116 von der Trägerstruktur 103 herunter. Anschließend verläuft das Ladekabel 101 zu dem ersten Aufhängepunkt 112, bildet eine Schlaufe und verläuft in Gegenrichtung zu dem zweiten Aufhängepunkt 122. Der Bereich des Ladekabels 101 zwischen dem Kopplungspunkt 116 und dem zweiten Aufhängepunkt 122 bildet somit einen C-förmigen Verlauf. Der Bereich der Schlaufe am ersten Aufhängepunkt 112 kann flexibel in Richtung Boden 115 verstellt werden. Entsprechend kann auch der Bereich am Ladestecker 102 bzw. am zweiten Aufhängepunkt 122 flexiblen Richtung Boden 115 verstellt werden. Je nachdem, wie die Längenverhältnisse zwischen dem ersten Tragseil 111 und dem zweiten Tragseil 112 ausgebildet sind, kann die Form des Seilverlaufs des Ladekabels 101 eingestellt werden.

Der Ausleger 106 kann z.B. schwenkbar an dem Querbalken 104 befestigbar sein. Somit kann beispielsweise eine Position der an dem Ausleger 106 befestigten Seilzugvorrichtungen 110, 120 quer zur Einfahrrichtung justiert werden.

Der Ausleger 106 weist zwischen zwei Auslegerenden einen Verstärkungsbalken 107 auf, welcher senkrecht nach oben, gegenüberliegend zum Boden 115, von dem Ausleger 106 hervorsteht. Ein gespanntes Verstärkungsseil 108 verbindet die Auslegerenden und den Verstärkungsbalken 107 zur Stabilisierung des Auslegers 106.

Die erste Seilzugvorrichtung 110 und die zweite Seilzugvorrichtung 120 weisen jeweils eine Seilwinde 109 auf. Die Seilwinde 109 ist insbesondere eine angetriebene Seilwinde, welche das entsprechende Trägerseil 111, 121 aufrollen und abwickeln kann. Die entsprechende Seilwinde 109 der ersten Seilzugvorrichtung 110 und die Seilwinde 109 der zweiten Seilzugvorrichtung 120 können beispielsweise mit einer gemeinsamen Steuereinheit gekoppelt werden. Die Steuereinheit kann entsprechende Steuersignale an die Seilwinden 109 übertragen, um diese zu steuern und entsprechend die Seillängen der Trägerseile 111, 121 einzustellen. Die Seilwinden 109 können elektrische Seilwinden mit einem elektrischen Antriebsmotor ausbilden. In dem Ladekabel 101, insbesondere an dem Ladestecker 102, ist ein Bedienelement 113 zur Steuerung der elektrischen Seilwinde 109 angeordnet, wobei das Bedienelement 113 insbesondere drahtlos mit der Seilwinde 109 zum Austausch von Steuerdaten gekoppelt ist. Der Benutzer kann somit direkt am Ladestecker 102 die entsprechende Position des Ladesteckers 102 über das Steuern der Seilwinden und entsprechend der Längen der Trägerseile 111, 121 steuern, ohne dass der Benutzer Zugkräfte auf das Ladekabel 101 aufwenden muss.

Ferner kann die Seilwinde 109 mechanisch steuerbar mit einer federbasierten Einzugsvorrichtung aufweisend eine Rückzugsfeder, insbesondere einer Spiralfeder, ausbilden, welche derart konfiguriert ist, dass beim Ausziehen des entsprechenden Trägerseils 111, 121 aus der Seilwinde 109 eine Vorspannung der Rückzugsfeder generierbar ist. An dem Ladekabel 101 ist ferner ein Bedienseil 201 befestigt, welches derart angeordnet ist, dass mittels des Bedienseils 202 das Ladekabel 101 für einen Benutzer, insbesondere in der vom Boden 115 beabstandeten Position wie in Fig. 2 dargestellt, erreichbar ist. Das Bedienseil 201 kann insbesondere in der Nähe des Ladestecker positioniert sein. Wenn die Trägerseile 111, 121, wie in Fig. 2 dargestellt, kurz eingestellt sind und das Ladekabel 101 entsprechend beabstandet vom Boden 115 positioniert ist, kann der Benutzer dennoch das Ende des Bedienseils 201 greifen und das Ladekabel 101 zu sich heranziehen, bis er dieses greifen kann.

Die Seilwinde 109 sind an dem Ausleger 106 ortsfest an diesem befestigt. Alternativ können die Seilwinden 109 an den entsprechenden Aufhängepunkten 112, 122 angeordnet sein und sich relative zum Ausleger 106 bewegen.

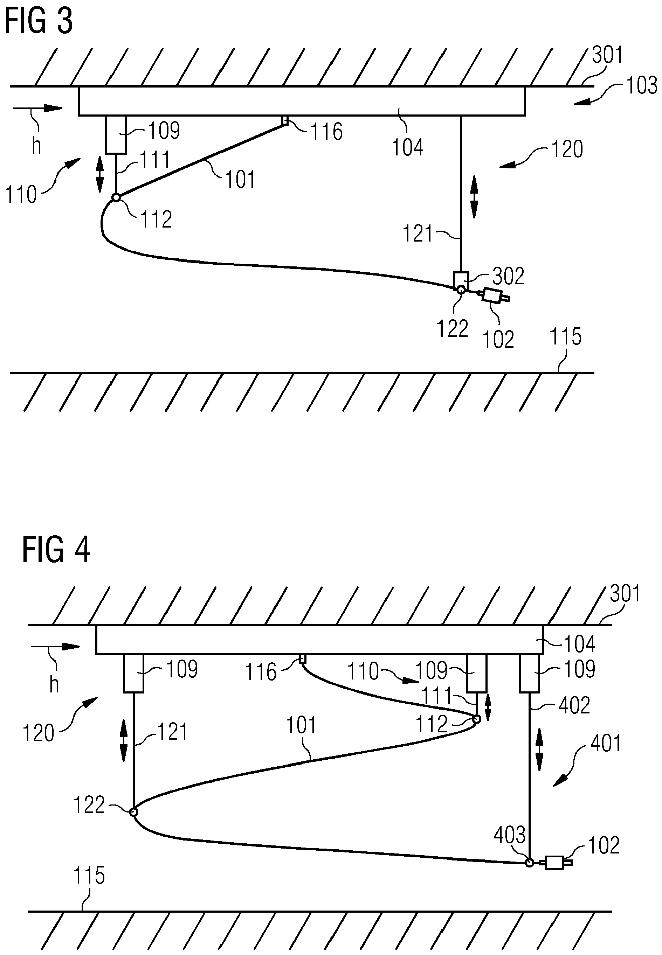

Fig. 3 zeigt eine schematische Darstellung einer Vorrichtung 100 mit einer Trägerstruktur 103, die an einer Deckenkonstruktion 301, z.B. an einer Decke eines Gebäudes, befestigt ist.

Ferner ist in Figur 3 eine Seilwinde 302 der zweiten Seilzugvorrichtung 120 dargestellt, die an dem zweiten Aufhängepunkt 122 selbst angeordnet. Das Trägerseil 121 ist an dem Querbalken 104 fixiert und die Seilwinde 302 bewegt sich relativ zu dem Querbalken 104 und verfährt zusammen mit dem Aufhängepunkt 122 in Richtung Boden 115.

Fig. 4 zeigt eine schematische Darstellung einer Vorrichtung mit drei Seilzugvorrichtungen 110, 120, 401. Ähnlich wie in der Ausführungsform aus Fig. 1 weist die Vorrichtung 100 eine Trägerstruktur 103, die beabstandet von einem Boden 115 befestigbar ist, ein Ladekabel 101, welches an eine Elektrizitätsquelle anschließbar ist und einen Ladestecker 102 zum Anstecken an einem zu ladenden Fahrzeug 150 aufweist, auf. Ferner weist die Vorrichtung 100 eine erste Seilzugvorrichtung 110 auf, die an der Trägerstruktur 103 befestigt ist, wobei die erste Seilzugvorrichtung 110 ein erstes Trägerseil 111 aufweist, welches zwischen einem ersten Aufhängepunkt 112 des Ladekabels 101 und der Trägerstruktur 103 befestigt ist, und eine zweite Seilzugvorrichtung 120, die an der Trägerstruktur 103 beabstandet von der ersten Seilzugvorrichtung 110 befestigt ist, wobei die zweite Seilzugvorrichtung 120 ein zweites Trägerseil 121 aufweist, welches zwischen einem zweiten Aufhängepunkt 122 des Ladekabels 101, welcher beabstandet von dem ersten Aufhängepunkt 112 ausgebildet ist, und der Trägerstruktur 103 befestigt ist. Die erste Seilzugvorrichtung 110 und die zweite Seilzugvorrichtung 120 sind jeweils derart ausgebildet, dass die Längen des ersten Trägerseils 111 und des zweiten Trägerseils 121 unabhängig voneinander derart einstellbar sind, dass ein Abstand des ersten Aufhängepunkts 112 und des zweiten Aufhängepunkts 122 zum Boden 115 einstellbar ist.

Zudem weist die Vorrichtung 100 die dritte Seilzugvorrichtung 401 auf, die an der Trägerstruktur 103 bzw. dem Querbalken 104 beabstandet von der ersten Seilzugvorrichtung 110 und von der zweiten Seilzugvorrichtung 120 befestigt ist. Die dritte Seilzugvorrichtung 401 weist ein drittes Trägerseil 402 auf, welches zwischen einem dritten Aufhängepunkt 403 des Ladekabels 101, welcher beabstandet von dem ersten Aufhängepunkt 112 und dem zweiten Aufhängepunkt 122 ausgebildet ist, und der Trägerstruktur 103 befestigt ist. Die dritte Seilzugvorrichtung 401 ist derart ausgebildet, dass die Länge des dritten Trägerseils 402 einstellbar ist.

Insbesondere läuft dabei das Ladekabel 101 von dem Kopplungspunkt 116 zu dem ersten Aufhängepunkt 112, weiter zu dem zweiten Aufhängepunkt 122 und schließlich zu dem dritten Aufhängepunkt 403. Der Koppelpunkt 116 ist dabei zwischen dem ersten Aufhängepunkt 112 und dem zweiten Aufhängepunkt 122 angeordnet. Insbesondere ist die dritte Seilzugvorrichtung 401 derart angeordnet, dass der Koppelpunkt 116 ebenfalls zwischen dem zweiten und dem dritten Aufhängepunkt 122, 403 vorliegt. Mit anderen Worten hängt das Ladekabel 101 zunächst von dem Kopplungspunkt 116 von der Trägerstruktur herunter. Anschließend verläuft das Ladekabel 101 zu dem ersten Aufhängepunkt 112, bildet eine Schlaufe und verläuft in Gegenrichtung zu dem zweiten Aufhängepunkt 122. Dort bildet das Ladekabel 101 erneut eine Schlaufe und verläuft zum dritten Aufhängepunkt 403. Der Bereich des Ladekabels 101 zwischen dem Kopplungspunkt 116 und dem dritten Aufhängepunkt 403 bildet somit einen S-förmigen Verlauf. Aufgrund der Längeneinstellung von drei Trägerseilen 111, 121, 402 kann die Flexibilität bzw. können die Einstellmöglichkeiten der Position des Ladesteckers 102 erhöht werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 100: Vorrichtung
- 101: Ladekabel
- 102: Ladestecker
- 103: Trägerstruktur
- 104: Querbalken
- 105: Bodenstütze
- 106: Ausleger
- 107: Verstärkungsbalken
- 108: Verstärkungsseil
- 109: Seilwinde
- 110: erste Seilzugvorrichtung
- 111: erstes Trägerseil
- 112: erste Aufhängepunkt
- 113: Bedienelement
- 114: Ladeverteiler
- 115: Boden
- 116: Kopplungspunkt
- 120: zweite Seilzugvorrichtung
- 121: zweites Trägerseil
- 122: zweite Aufhängepunkt
- 150: Fahrzeug

- 201: Bedienseil

- 301: Deckenkonstruktion
- 302: Seilwinde am Aufhängepunkt

- 401: drittes Seilzugvorrichtung
- 402: drittes Trägerseil
- 403: dritter Aufhängepunkt

- h: horizontale Richtungskomponente

## Patentansprüche

1. Vorrichtung (100) zum Bereitstellen eines Ladekabels (101) für ein Fahrzeug (150), die Vorrichtung (100) aufweisend,
eine Trägerstruktur (103), die beabstandet von einem Boden (115) befestigbar ist,
ein Ladekabel (101), welches an eine Elektrizitätsquelle anschließbar ist und einen Ladestecker (102) zum Anstecken an einem zu ladenden Fahrzeug (150) aufweist,
wobei das Ladekabel (101) an der Trägerstruktur (103) befestigt ist,
eine erste Seilzugvorrichtung (110), die an der Trägerstruktur (103) befestigt ist,
wobei die erste Seilzugvorrichtung (110) ein erstes Trägerseil (111) aufweist, welches zwischen einem ersten Aufhängepunkt (112) des Ladekabels (101) und der Trägerstruktur (103) befestigt ist, und
eine zweite Seilzugvorrichtung (120), die an der Trägerstruktur (103) beabstandet von der ersten Seilzugvorrichtung (110) befestigt ist,
wobei die zweite Seilzugvorrichtung (120) ein zweites Trägerseil (121) aufweist, welches zwischen einem zweiten Aufhängepunkt (122) des Ladekabels (101), welcher beabstandet von dem ersten Aufhängepunkt (112) ausgebildet ist, und der Trägerstruktur (103) befestigt ist, und
wobei die erste Seilzugvorrichtung (110) und die zweite Seilzugvorrichtung (120) jeweils derart ausgebildet sind, dass die Längen des ersten Trägerseils (111) und des zweiten Trägerseils (121) unabhängig voneinander derart einstellbar sind, dass ein Abstand des ersten Aufhängepunkts (112) und des zweiten Aufhängepunkts (122) zum Boden (115) einstellbar ist.

2. Vorrichtung (100) gemäß dem vorhergehenden Anspruch,
wobei das Ladekabel (101) von einem Kopplungspunkt (116) mit der Trägerstruktur (103) aus zu dem ersten Aufhängepunkt (112) und anschließend zu dem zweiten Aufhängepunkt (122) verläuft,
wobei das Ladekabel (101) derart an der Trägerstruktur (103), der ersten Seilzugvorrichtung (110) und der zweiten Seilzugvorrichtung (120) angeordnet ist, dass entlang einer horizontalen Richtungskomponente (h) der Kopplungspunkt (116) zwischen dem ersten Aufhängepunkt(112) und dem zweiten Aufhängepunkt (122) vorliegt.

3. Vorrichtung (100) gemäß einem der vorhergehenden Ansprüche,
wobei die Trägerstruktur (103) einen Querbalken (104) aufweist, an welchem die erste Seilzugvorrichtung und die zweiten Seilzugvorrichtung (120) angeordnet sind,
wobei der Querbalken (104) zumindest einseitig mittels einer Bodenstütze (105) beabstandet am Boden (115) befestigbar ist, oder
wobei der Querbalken (104) an einer Deckenkonstruktion (301), insbesondere an einer Decke eines Gebäudes, befestigbar ist.

4. Vorrichtung (100) gemäß dem vorhergehenden Anspruch,
wobei die Trägerstruktur (103) einen Ausleger (106) aufweist, an welchem die erste Seilzugvorrichtung (110) und/oder die zweite Seilzugvorrichtung (120) angeordnet ist,
wobei der Ausleger (106) an dem Querbalken (104) befestigt ist und seitlich zur Erstreckungsrichtung des Querbalkens (104) herausragt.

5. Vorrichtung (100) gemäß dem vorhergehenden Anspruch,
wobei der Ausleger (106) schwenkbar an dem Querbalken (104) befestigbar ist.

6. Vorrichtung (100) gemäß einem der Ansprüche 4 oder 5,
wobei der Ausleger (106) in Erstreckungsrichtung des Querbalkens (104) verschiebbar ist.

7. Vorrichtung (100) gemäß einem der Ansprüche 4 bis 6,
wobei der Ausleger (106) zwischen zwei Auslegerenden einen Verstärkungsbalken (107) aufweist, welcher von dem Ausleger (106) hervorsteht,
wobei zumindest ein gespanntes Verstärkungsseil (108) die Auslegerenden und den Verstärkungsbalken (107) zur Stabilisierung des Auslegers (106) verbindet.

8. Vorrichtung (100) gemäß einem der vorhergehenden Ansprüche,
wobei die erste Seilzugvorrichtung (110) und/oder die zweite Seilzugvorrichtung (120) eine Seilwinde (109) aufweist.

9. Vorrichtung (100) gemäß dem vorhergehenden Anspruch,
wobei die Seilwinde (109) eine elektrische Seilwinde (109) zum Einstellen der Länge des entsprechenden Trägerseils (111, 121, 401) ist.

10. Vorrichtung (100) gemäß dem vorhergehenden Anspruch,
wobei in dem Ladekabel (101), insbesondere an dem Ladestecker (102), ein Bedienelement (113) zur Steuerung der elektrischen Seilwinde (109) angeordnet ist,
wobei das Bedienelement (113) insbesondere drahtlos oder drahtgebunden mit der Seilwinde (109) zum Austausch von Steuerdaten gekoppelt ist.

11. Vorrichtung (100) gemäß Anspruch 8,
wobei die Seilwinde (109) zum Einstellen der Länge des entsprechenden Trägerseils (111, 121, 401) eine federbasierte Einzugsvorrichtung mit einer Rückzugsfeder, insbesondere einer Spiralfeder, aufweist, welche derart konfiguriert ist, dass beim Ausziehen des entsprechenden Trägerseils (111, 121, 401) aus der Seilwinde (109) eine Vorspannung der Rückzugsfeder generierbar ist.

12. Vorrichtung (100) gemäß einem der Ansprüche 8 bis 11, wobei die Seilwinde (109) an der Trägerstruktur (103) oder an dem entsprechenden Aufhängepunkt (112, 122, 403) angeordnet ist.

13. Vorrichtung (100) gemäß einem der vorhergehenden Ansprüche,
wobei an dem Ladekabel (101) ein Bedienseil (201) befestigt ist, welches derart angeordnet ist, dass mittels des Bedienseils (201) das Ladekabel (101) für einen Benutzer erreichbar ist.

14. Vorrichtung (100) gemäß einem der vorhergehenden Ansprüche,
wobei an der Trägerstruktur (103) ein Ladeverteiler (114), welcher mit dem Ladekabel (101) gekoppelt ist, angeordnet ist.

15. Vorrichtung (100) gemäß einem der vorhergehenden Ansprüche, ferner aufweisend
eine dritte Seilzugvorrichtung (401), die an der Trägerstruktur (103) beabstandet von der ersten Seilzugvorrichtung (110) und von der zweiten Seilzugvorrichtung (120) befestigt ist,
wobei die dritte Seilzugvorrichtung (401) ein drittes Trägerseil (402) aufweist, welches zwischen einem dritten Aufhängepunkt (403) des Ladekabels (101), welcher beabstandet von dem ersten Aufhängepunkt (112) und dem zweiten Aufhängepunkt (122) ausgebildet ist, und der Trägerstruktur (103) befestigt ist,
wobei die dritte Seilzugvorrichtung (401) derart ausgebildet ist, dass die Länge des dritten Trägerseils (401) einstellbar ist.

16. Vorrichtung (100) gemäß einem der vorhergehenden Ansprüche, ferner aufweisend
ein weiteres Ladekabel, welches an eine Elektrizitätsquelle anschließbar ist und einen weiteren Ladestecker zum Anstecken an einem weiteren zu ladenden Fahrzeug aufweist, wobei das weitere Ladekabel an der Trägerstruktur befestigt ist,
eine weitere erste Seilzugvorrichtung, die an der Trägerstruktur befestigt ist,
wobei die weitere erste Seilzugvorrichtung ein weiteres erstes Trägerseil aufweist, welches zwischen einem weiteren ersten Aufhängepunkt des weiteren Ladekabels und der Trägerstruktur (103) befestigt ist, und
eine weitere zweite Seilzugvorrichtung, die an der Trägerstruktur (103) beabstandet von der weiteren ersten Seilzugvorrichtung befestigt ist,
wobei die weitere zweite Seilzugvorrichtung ein weiteres zweites Trägerseil aufweist, welches zwischen einem weiteren zweiten Aufhängepunkt des weiteren Ladekabels, welcher beabstandet von dem weiteren ersten Aufhängepunkt ausgebildet ist, und der Trägerstruktur auf 103 befestigt ist, und
wobei die weitere erste Seilzugvorrichtung und die weitere zweite Seilzugvorrichtung jeweils derart ausgebildet sind, dass die Längen des weiteren ersten Trägerseils und des weiteren zweiten Trägerseils unabhängig voneinander derart einstellbar sind, dass ein Abstand des weiteren ersten Aufhängepunkts und des weiteren zweiten Aufhängepunkts zum Boden (115) einstellbar ist.

17. Verfahren zum Bereitstellen eines Ladekabels (101) für ein Fahrzeug (150) mit einer Vorrichtung (100) gemäß einem der vorhergehenden Ansprüche, das Verfahren aufweisend,
Einstellen der Längen des ersten Trägerseils (111) und des zweiten Trägerseils (121) unabhängig voneinander, um einen Abstand des ersten Aufhängepunkts (112) und des zweiten Aufhängepunkts (122) zum Boden (115) einzustellen.
